# EUROPEAN PATENT APPLICATION

(11) **EP 2 058 999 A1**
(43) Date of publication of application: **13.05.2009**
(21) Application number: 07021950.6
(22) Date of filing: 12.11.2007
(51) Int. Cl.: H04L 29/06

(54) **A method for data transmission in a communication network for multihoming**

(71) Applicant: SIEMENS AKTIENGESELLSCHAFT, 80333 München (DE)
(72) Inventor: Görg, Carmelita, Prof., 28357 Bremen (DE); Pangboonyanon, Varaporn, 28195 Bremen (DE); Pittmann, Frank, 12099 Berlin (DE); Udugama, Asanga, 28357 Bremen (DE)

(57) **Abstract**

The invention relates to a method for data transmission in a communication network, in which a user device (MN) being assigned to a home network (HN) has a home address (HoA) stored in a home agent (HA) in the home network (HN), wherein:
- when the user device (MN) attaches in parallel to the home network (HN) and a foreign network (FN1, FN2), a first care of address (CoA0) associated with the home network and a second care of address (CoA1) associated with the foreign network (FN1, FN2) are assigned to the user device (MN), said first and second care of addresses (CoA0, CoA1) being stored in the home agent (HA);
- in the presence of first data destined to the home address of the user device (MN) and to be transmitted via the home network (HN), the first data is captured by the home agent (HA) and tunnelled via a first tunnel (T0) to the first care of address (CoA0);
- in the presence of second data destined to the home address (HA) of the user device (MN) and to be transmitted via the foreign network (FN1, FN2), the second data is captured by the home agent (HA) and tunnelled via a second tunnel (T1) to the second care of address (CoA1).

## Description

The invention relates to a method for data transmission in a communication network as well as to a corresponding communication network and user device.

New generation communication networks support heterogeneous access technologies enabling a user device to attach to different access networks in order to communicate with other nodes in the network. In order to provide seamless continuity of connectivity and services, when a user device changes its point of attachment from one access network to another, the Mobile IP protocol is known from the prior art. This protocol enables for a packet-based data transport a change of the user device from a home network assigned to the device to another foreign network during an ongoing data transmission session.

Due to the increasing number of access technologies usable by a single device there is a need for a mobility management enabling a seamless connectivity during simultaneous network attachments of one user device to various networks. Pure Mobile IP is not suitable for a mobility management during parallel network attachments because Mobile IP only supports the attachment either to the home network of the user device or to a foreign network.

Therefore, it is an object of the invention to provide a method for data transmission enabling seamless connectivity during simultaneous network attachments of a user device to more than one network, one of which being a home network of the user device.

This object is solved by the independent patent claims. Preferred embodiments are defined in the dependent claims.

In the method according to the invention, a user device being assigned to a home network has a home address stored in a home agent in the home network. When the user device attaches in parallel to the home network and a foreign network, a first care of address associated with the home network and a second care of address associated with the foreign network are assigned to the user device, said first and second care of addresses being stored in the home agent. The method according to the invention distinguishes between first data destined to the home address of the user device and to be transmitted via the home network and second data also destined to the home address of the user device but to be transmitted via the foreign network. When first data are to be transmitted, this data is captured by the home agent and tunnelled via a first tunnel to the first care of address. Second data is also captured by the home agent, but this data is tunnelled via a second tunnel to the second care of address.

According to the invention, during parallel network attachment to the home network and at least one foreign network, a first care of address instead of the home address is used for addressing the user device so that there is no difference between the home network and foreign networks during data transmission. As a consequence, a simple and straight-forward method is provided for transmitting data via different networks to which a single user device is attached.

The invention may be easily implemented in known mobility protocols which usually direct data to be transmitted via the home network directly to the user device. Hence, in a preferred embodiment of the invention, the user device is blocked to receive first data and second data directly via its home address, when the user device attaches in parallel to the home network and a foreign network.

In another embodiment of the invention, the first and second data are captured by the home agent using Proxy Neighbour Discovery which is a well-known technique. During this Proxy Neighbour Discovery, a home router in the home network receiving said first and/or second data preferably multicasts a proxy neighbour solicitation indicating the home address of the user device into the home network, whereupon only the home agent (and not the user device) replies with a proxy neighbour advertisement, thus resulting in a delivery of the first and/or second data from the home router to the home agent. The data delivered to the home agent are then tunnelled via the first or second tunnel to the user device.

In another preferred embodiment of the invention, multiple attachments of a user device to several foreign networks are supported. In such an embodiment, when the user device attaches in parallel to the home network and several foreign networks, second care of addresses, each associated with one foreign network, are assigned to the user device, wherein the second care of addresses are stored in the home agent and second data destined to the home address of the user device and to be transmitted via a predetermined foreign network of said several foreign networks is captured by the home agent and tunnelled to the second care of address associated with the predetermined foreign network.

In another preferred embodiment of the invention, when a user device is only attached to the home network, the first data is captured only by the user device. Hence, in case that only one attachment to the home network occurs, the data overhead associated with tunnelling is avoided because the first data are directly captured by the user device. Proxy Neighbour Discovery may be used for the user device in order to capture first data. In a preferred embodiment, the Proxy Neighbour Discovery includes the following steps: the home router in the home network receiving the first data multicasts a proxy neighbour solicitation indicating the home address of the user device into the home network, whereupon only the user device replies with a proxy neighbour advertisement, thus resulting in a delivery of the first data from the home router to the user device.

Different techniques for assigning the first and second care of addresses to the user device may be used. Preferably, known address auto-configuration mechanisms, e.g. stateful or stateless auto-configuration, are implemented to allocate those addresses to the user device.

The first and/or second data transmitted by the method of the invention may include various data. Particularly, this data may comprise voice data and/or video data and/or multimedia data. Furthermore, in a preferred embodiment, the data to be transmitted to the user device is categorized as first or second data depending on the content of the data. This enables suitable transmission adjustments. Particularly, high-volume data, e.g. multimedia data, is preferably transmitted by using a network with high data transmission rates whereas other data may be also transmitted via networks with lower transmission rates.

In another embodiment of the invention, the data transmission from the user device to another user device also uses the first and second tunnels. To do so, data originating from the user device and destined to another user device is transmitted to the other user device via the first and/or second tunnel, wherein the first tunnel is used for data to be transmitted via the home network and the second tunnel is used for data to be transmitted via the foreign network.

In a preferred embodiment, the data transmission in the communication network is a packet-based data transmission, particularly an IP based data transmission (IP = Internet Protocol). When using data transmission based on IP, the transmission of the first and/or second data is preferably based on Mobile IP, particularly Mobile IPv6, including the extension to support simultaneous network attachments to a home network and a foreign network according to the invention.

The invention is particularly suitable for a communication network supporting heterogeneous access technologies. In such a network, the parallel attachment of the user device preferably comprises an attachment to at least one mobile telecommunications system, particularly to one or more 3GPP systems and/or non 3GPP systems, e.g. WLAN systems or WiMAX systems. The 3GPP systems preferably comprise one or more UMTS systems (UMTS = Universal Mobile Telecommunications System) and/or one or more GSM systems (GSM = Global System for Mobile Telecommunication).

Besides the above method for data transmission, the invention also relates to a communication network comprising a home network and one or more foreign networks, wherein a user being assigned to the home network has a home address stored in a home agent in the home network, the network being adapted to perform the following steps:
- when the user device attaches in parallel to the home network and a foreign network, a first care of address associated with the home network and a second care of address associated with the foreign network are assigned to the user device, said first and second care of addresses being stored in the home agent;
- in the presence of first data destined to the home address of the user device and to be transmitted via the home network, the first data is captured by the home agent and tunnelled via a first tunnel to the first care of address;
- in the presence of second data destined to the home address of the user device and to be transmitted via the foreign network, the second data is captured by the home agent and tunnelled via a second tunnel to the second care of address.

Such a communication network is preferably adapted to perform any variant of the above defined method for data transmission.

In addition to the above method and communication network, the invention also relates to a user device, comprising at least means for receiving assignments a first care of address associated with a home network and a second care of address associated with a foreign network in addition to a home address when attaching in parallel to said home network and said foreign network, wherein said home address and first and second care of addresses are stored in the home agent in the home network. Furthermore, the user device comprises means for receiving first data destined to the home address of the user device and transmitted via the home network, wherein the first data is captured by the home agent and tunnelled via a first tunnel to the first care of address, via the first care of address, and means for receiving second data destined to the home address of the user device and transmitted via the foreign network, wherein the second data is captured by the home agent and tunnelled via a second tunnel to the second care of address, via the second care of address.

Preferably, such user device also comprises further means adapted to perfom any variant of the above defined method.

Embodiments of the invention will now be described with respect to the accompanying drawing.

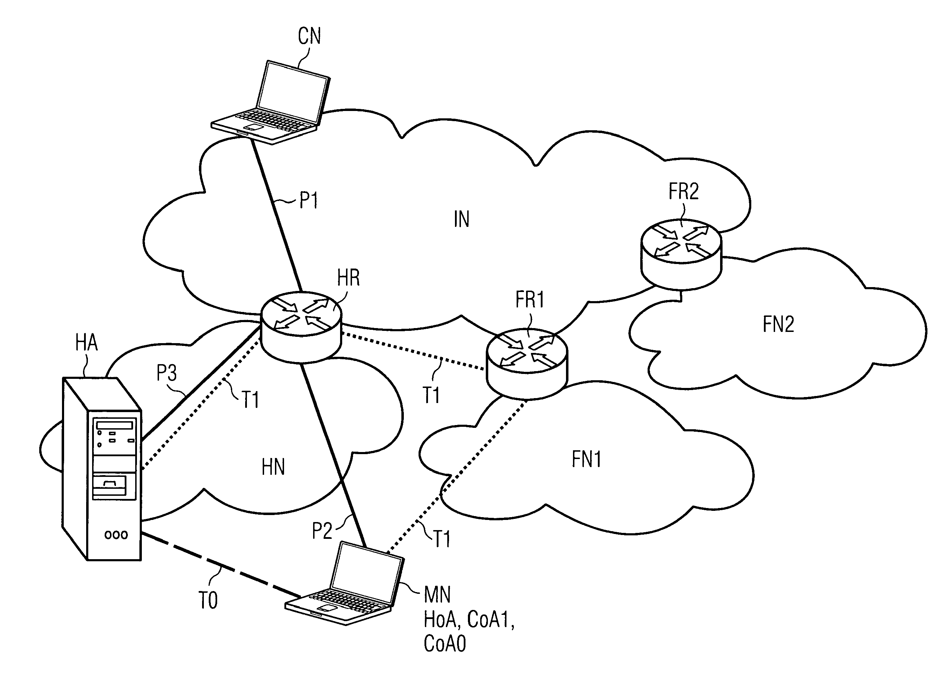

- Fig. 1: shows a schematic view of a communication network wherein data are transmitted according to an embodiment of the invention.

Fig. 1 shows a packet-based communication network in which the packets are transported by the IP protocol. The network is connected to the Internet IN via several access networks, namely a home network HN comprising a home router HR, a foreign network FN1 comprising a foreign router FR1 and another foreign network FN2 comprising a foreign router FR2. The network HN is the home network of a corresponding user device in the form of a mobile node MN which is a laptop in Fig. 1 but may be any other device, e.g. a mobile phone, a personal computer, a PDA and the like. The communication system may also include further access networks not shown in Fig. 1. The communication network supports heterogeneous access systems, i.e. the networks HN, FN1 and FN2 may be based on different access technologies. In the embodiment shown in Fig. 1, the home network HN is a 3GPP network, particularly a UMTS/GPRS network, and the foreign network FN1 is a WLAN network. The foreign network FN2 may be another 3GPP network, e.g. a GSM network, or another WLAN network.

In the home network HN, there is located a home agent HA which is a well-known component in Mobile IP. A home address HoA assigned to the mobile node MN in the home network is stored in the home agent HA. Furthermore, the home agent includes a binding cache comprising the information whether the mobile node MN has one or more so-called care of addresses in other foreign networks. The home agent is used for tunnelling data to the mobile node when the mobile node is attached to a foreign network. To do so, the home agent uses the care of address assigned to the mobile node in the foreign network. In the scenario of Fig. 1, the mobile node MN has the home address HoA as well as a care of address CoA1 in the foreign network FN1.

In the network of Fig. 1, a parallel network attachment via different access networks is possible, and the user device MN has two different interfaces in order to connect via UMTS with the home network HN and via WLAN with the foreign network FN1. In order to enable a parallel network attachment, extensions based on the Mobile IPv6 protocol are incorporated in the embodiment of the invention described hereinafter, particularly an extended Proxy Neighbour Discovery is used.

In the scenario of Fig. 1, a data transmission between the user device MN and another user device CN (CN = correspondent node) via both the home network HN and the foreign network FN1 is performed. Such a data transmission may for example occur when a user of the mobile node MN is moving in a train. The user in the train may have an ongoing web browsing session being established on a transmission path via the home network HN. While browsing, the user is asked to download a new file trailer. Due to the low bandwidth of data transmission via the UMTS network HN, the user decides to wait until he reaches the next train station. In the next train station, the user attaches to a WLAN hotspot, e.g. to the foreign network FN1, in order to start the download of the file trailer via the FTP protocol. Nevertheless, the user will still have a parallel attachment to the UMTS network HN, thus enabling to redirect the download via the home network HN when the train is leaving the station and the WLAN network FN1 is no longer available.

In case that the user device MN is only attached to the home network HN, data are transmitted via the usual mechanism in Mobile IPv6. In this instance, data packets arriving via a path P1 from the correspondent node CN in the home router HR of the home network HN will be forwarded by using conventional Proxy Neighbour Discovery. According to this Proxy Neighbour Discovery, the home router sends a neighbour solicitation as a multicast message into the home network HN. This neighbour solicitation includes the home address HoA of the mobile node MN. As the mobile node MN is in its home network HN, it will reply to this neighbour solicitation by a neighbour advertisement specifying its link layer address, i.e. its MAC address (MAC = Medium Access Control). After receiving this neighbour advertisement, the home router HR will route the packet directly to the mobile node MN without going through the home agent HA. This is indicated by path P2 in Fig. 1.

In a scenario, in which the mobile node MN is only attached to the foreign network FN1 in Fig. 1, data transmitted from the correspondent node CN to the mobile node MN will be redirected by the home agent HA by conventional Mobile IP as well. To do so, when the mobile node MN is in the foreign network FN1, it will receive the care of address CoA1, which is notified to the home agent HA. Hence, the home agent now has a binding cache including one entry associating the home address HoA of the mobile node MN with the care of address CoA1. When data from the correspondent node CN destined to the mobile node MN arrive in the home router HR, the Proxy Neighbour Discovery as described above will be initiated. Hence, the home router HR sends a neighbour solicitation including the home address HoA into the home network HN. However, the mobile node MN is now no longer attached to the home network so that it cannot respond by sending a neighbour advertisement. Instead, the home agent HA will now send a neighbour advertisement on behalf of the mobile node MN including the link layer address of the home agent. As a consequence, the home router HR will now route the packets to the home agent HA as indicated by line P3. The data packets captured in this way by the home agent will then be tunnelled via a corresponding tunnel to the mobile node MN. This tunnel goes from the home agent HA via the home router HR and the foreign router FR1 to the mobile node MN and is indicated as a dotted line T1 in Fig. 1.

According to the invention, it is possible that the mobile node MN attaches in parallel to the home network HN and one or more foreign networks. In the scenario of Fig. 1, the mobile node MN is attached to the home network HN as well as to the foreign network FN1. In order to enable a data transmission via the home network HN and/or the foreign network FN1 during this parallel network attachment, changes of the behaviour of Mobile IP and the above described Proxy Neighbour Discovery are implemented. To do so, the mobile node MN acts for data being transmitted via the home network HN as if it was located in a foreign network. This behaviour is implemented by allocating another care of address CoA0 to the mobile node MN, said care of address being an address in the home network HN but different from the home address HoA. The home agent HA will include this care of address CoA0 in its binding cache, i.e. it will include a further entry associating the home address HoA with the care of address CoA0.

In order to deliver data packets from the correspondent node CN to the mobile node MN via the home network HN, an extended Proxy Neighbour Discovery will now be used. Particularly, when data packets destined to the home address HoA and to be transmitted via the home network HN arrive in the home router HR, the home router will multicast a neighbour solicitation including the home address HoA in the home network HN. Though the mobile node MN is in the home network HN, it will not respond to this neighbour solicitation by a neighbour advertisement. In other words, the mobile node MN is blocked for sending neighbour advertisements in response to solicitations including its home address when it is attached in parallel to the home network and at least one further foreign network. The mobile node may retrieve the information that it is attached in parallel to the home network and another network by a binding list stored in the mobile node. This cache includes an association between the home address HoA of the mobile node and the care of address CoA0. Such an association only occurs during parallel network attachment to the home network and at least one foreign network.

Instead of the mobile node MN, the home agent HA will reply to the neighbour solicitation by a neighbour advertisement including the link layer address of the home agent. As a consequence, data packets will be forwarded as indicated by line P3 to the home agent HA, and the home agent HA will tunnel those packets by IP-IP encapsulation with the care of address CoA0 via tunnel T0 to the user device MN. In order to transport the packet via this tunnel T0, the home agent HA multicasts a neighbour solicitation for the care of address CoA0. The mobile node replies with a corresponding neighbour advertisement indicating its link layer address. Thereafter, the home agent delivers the data packets via the tunnel T0 to the mobile node MN whereupon the mobile node MN decapsulates the packets for further processing.

In case that data are to be transmitted via the foreign network FN1 to the mobile node MN during a parallel network attachment of the user device MN to the networks HN and FN1, the tunnel T1 which has been described in the foregoing will be used. To do so, when data packets to be transmitted via the foreign network FN1 arrive at the home router HR, the home router HR will multicast a neighbour solicitation indicating the home address HoA of the mobile node MN. Though the mobile node MN is attached to the home network, a neighbour advertisement will not be send by the mobile node MN. This may be done by the above described blocking mechanism. However, a proxy neighbour advertisement will be returned to the home router HR by the home agent HA indicating the link layer address of the home agent. Thereafter, data packets will be delivered via the transmission path P3 to the home agent HA. As the data packets arriving in the home agent HA are to be transmitted via the foreign network FN1, the home agent HA will now encapsulate the packets by IP-IP encapsulation with the care of address CoA1 in the foreign network FN1 so that the packets are forwarded via tunnel T1 through the home router HR and the foreign router FR1 to the mobile node MN. The data arriving via the tunnel T1 in the user device MN will then be decapsulated for further processing.

The care of addresses CoA0 and CoA1 are assigned to the mobile node MN by auto-address configuration. Conventional stateless or stateful auto-address configuration which are well-known in the art may be used for allocating care of addresses to the mobile node. With respect to the care of address CoA0 in the home network, it has to be ensured that this address is different from the home address HoA of the mobile node in the home network.

As described before, during a parallel network attachment of the mobile node MN, data traffic to the mobile node MN is directed by the home agent HA to the mobile node MN via the tunnel T0 or the tunnel T1. The decision whether the traffic is to be directed via the home network HN through tunnel T0 or via the foreign network FN1 through tunnel T1 may be given by an appropriate flow management system. Such a system may decide on various criteria through which networks data are to be transmitted. Furthermore, there may be the possibility that the user decides which network is to be used for data transmission.

With respect to Fig. 1, a data transmission from a correspondent node CN to a mobile node MN has been described. Preferably, the data transmission in the reverse direction from the mobile node MN to the correspondent node CN will also flow via the tunnels T0 or T1. Nevertheless, it may also be possible to use different reverse paths for data transmission under certain conditions. Furthermore, in a preferred embodiment, when the user device MN is no longer attached to any foreign networks, the tunnel T0 will no longer be used, and the method will return to a conventional data transmission wherein data are transmitted directly from the home router via the path P2 to the mobile node. To do so, the mobile node will be allowed to reply to neighbour solicitations of the home router by neighbour advertisements for its home address which was not possible during parallel network attachments.

The solution according to the invention as described above allows the utilization of multiple network attachments in Mobile IP Environments simultaneously when one or more attachments are connected to the home network of a user device. The invention is preferably used for inter-working between 3GPP and non-3GPP systems like UMTS and WLAN but may also be incorporated in networks only supporting the same type of access technology.

## Claims

1. A method for data transmission in a communication network, in which a user device (MN) being assigned to a home network (HN) has a home address (HoA) stored in a home agent (HA) in the home network (HN), wherein:
- when the user device (MN) attaches in parallel to the home network (HN) and a foreign network (FN1, FN2), a first care of address (CoA0) associated with the home network and a second care of address (CoA1) associated with the foreign network (FN1, FN2) are assigned to the user device (MN), said first and second care of addresses (CoA0, CoA1) being stored in the home agent (HA);
- in the presence of first data destined to the home address (HoA) of the user device (MN) and to be transmitted via the home network (HA), the first data is captured by the home agent (HA) and tunnelled via a first tunnel (T0) to the first care of address (CoA0);
- in the presence of second data destined to the home address (HoA) of the user device (MN) and to be transmitted via the foreign network (FN1, FN2), the second data is captured by the home agent (HA) and tunnelled via a second tunnel (T1) to the second care of address (CoA1).

2. The method according to claim 1, wherein, when the user device (MN) attaches in parallel to the home network (HN) and a foreign network (FN), the user device (MN) is blocked to receive the first data and/or the second data directly via its home address (HoA).

3. The method according to claim 1 or 2, wherein the first and second data are captured by the home agent (HA) using Proxy Neighbour Discovery.

4. The method according to claim 3, wherein during Proxy Neighbour Discovery a home router (HR) in the home network (HN) receiving said first and/or second data multicasts a neighbour solicitation indicating the home address of the user device (MN) into the home network (HN), whereupon only the home agent (HA) replies with a proxy neighbour advertisement, thus resulting in a delivery of the first and/or second data from the home router (HR) to the home agent (HA).

5. The method according to one of the preceding claims, wherein, when the user device (MN) attaches in parallel to the home network (HN) and several foreign networks (FN1, FN2), second care of addresses (CoA1), each associated with one foreign network (FN1, FN2), are assigned to the user device (MN), wherein the second care of addresses (CoA1) are stored in the home agent (HA) and second data destined to the home address (HoA) of the user device (MN) and to be transmitted via a predetermined foreign network (FN1, FN2) of said several foreign networks (FN1, FN2) is captured by the home agent (HA) and tunnelled to the second care of address (CoA1) associated with the predetermined foreign network (FN1, FN2).

6. The method according to one of the preceding claims, wherein, when a user device (MN) is only attached to the home network (HN), the first data is captured only by the user device (MN).

7. The method according to claim 6, wherein the first data is captured by the user device (MN) using Proxy Neighbour Discovery.

8. The method according to claim 7, wherein during Proxy Neighbour Discovery the home router (HR) in the home network (HN) receiving the first data multicasts a neighbour solicitation indicating the home address (HoA) of the user device (MN) into the home network (HN), whereupon only the user device (MN) replies with a proxy neighbour advertisement, thus resulting in a delivery of the first data from the home router (HR) to the user device (MN).

9. The method according to one of the preceding claims, wherein the first and/or second care of addresses are assigned by an address auto-configuration mechanism to the user device (MN).

10. The method according to one of the preceding claims, wherein the first and/or second data include voice data and/or video data and/or multimedia data.

11. The method according to one of the preceding claims, wherein data to be transmitted to the user device (MN) is categorized as first or second data in dependency on the content of the data.

12. The method according to one of the preceding claims, wherein data originating from the user device (MN) and destined to another user device (CN) is transmitted to the other user device (CN) by using the first and/or second tunnels (T0, T1), wherein the first tunnel (T0) is used for data to be transmitted via the home network (HN) and the second tunnel (T1) is used for data to be transmitted via the foreign network (FN1, FN2).

13. The method according to one of the preceding claims, wherein the data transmission in the communication network is a packet-based data transmission, particularly an IP-based data transmission.

14. The method according to claim 13, wherein the transmission of the first and/or second data is based on Mobile IP, particularly Mobile IPv6.

15. The method according to one of the preceding claims, wherein the parallel attachment of the user device (MN) comprises an attachment to at least one mobile telecommunications system, preferably to one or more 3GPP systems and/or WLAN systems and/or WiMAX systems.

16. A communication network for data transmission, comprising a home network (HN) and one or more foreign networks (FN), wherein a user device (MN) being assigned to the home network (HN) has a home address (HoA) stored in a home agent (HA) in the home network (HN), the network being adapted to perform the following steps:
- when the user device (MN) attaches in parallel to the home network (HN) and a foreign network (FN1, FN2), a first care of address (CoA0) associated with the home network and a second care of address (CoA1) associated with the foreign network (FN1, FN2) are assigned to the user device (MN), said first and second care of addresses (CoA0, CoA1) being stored in the home agent (HA);
- in the presence of first data destined to the home address (HoA) of the user device (MN) and to be transmitted via the home network (HA), the first data is captured by the home agent (HA) and tunnelled via a first tunnel (T0) to the first care of address (CoA0);
- in the presence of second data destined to the home address (HoA) of the user device (MN) and to be transmitted via the foreign network (FN1, FN2), the second data is captured by the home agent (HA) and tunnelled via a second tunnel (T1) to the second care of address (CoA1).

17. The communication network according to claim 16, being adapted to perform a method according to one of claims 2 to 15.

18. A user device (MN), comprising
means for receiving assignments a first care of address (CoA0) associated with a home network and a second care of address (CoA1) associated with a foreign network (FN1, FN2) in addition to a home address (HoA) when attaching in parallel to said home network (HN) and said foreign network (FN1, FN2), said home address and first and second care of addresses (CoA0, CoA1) being stored in the home agent (HA) in the home network (HN);
means for receiving first data destined to the home address (HoA) of the user device (MN) and transmitted via the home network (HA), wherein the first data is captured by the home agent (HA) and tunnelled via a first tunnel (T0) to the first care of address (CoA0), via the first care of address (CoA0), and for receiving second data destined to the home address (HoA) of the user device (MN) and transmitted via the foreign network (FN1, FN2), wherein the second data is captured by the home agent (HA) and tunnelled via a second tunnel (T1) to the second care of address (CoA1), via the second care of address (CoA1).

19. A user device (MN) according to claim 18, further comprising means for performing the method according to one of claims 2 to 15.
